(19) 

**Europäisches Patentamt**

**European Patent Office**

**Office européen des brevets**

(11) **EP 4 651 095 A1**

(12) **EUROPEAN PATENT APPLICATION**

(43) Date of publication:
19.11.2025 Bulletin 2025/47

(21) Application number: 24221093.8

(22) Date of filing: 18.12.2024

(51) International Patent Classification (IPC):
$G06V\ 10/62$ (2022.01)     $G06V\ 10/764$ (2022.01)
$G06V\ 10/82$ (2022.01)     $G06V\ 20/56$ (2022.01)
$G06V\ 20/64$ (2022.01)

(52) Cooperative Patent Classification (CPC):
G06V 20/56; G06V 10/62; G06V 10/764;
G06V 10/82; G06V 20/64

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 16.05.2024 KR 20240063980
09.07.2024 KR 20240090377

(71) Applicant: **Samsung Electronics Co., Ltd.**
**Suwon-si, Gyeonggi-do 16677 (KR)**

(72) Inventors:
• **SEONG, Hongje**
**16678 Suwon-si, Gyeonggi-do (KR)**
• **NAYEON, Kim**
**16678 Suwon-si, Gyeonggi-do (KR)**
• **JANG, Sujin**
**16678 Suwon-si, Gyeonggi-do (KR)**
• **JI, Dae Hyun**
**16678 Suwon-si, Gyeonggi-do (KR)**

(74) Representative: **Arnold & Siedsma**
**Bezuidenhoutseweg 57**
**2594 AC The Hague (NL)**

(54) **METHOD AND APPARATUS WITH VEHICLE DRIVING CONTROL**

(57) A method and apparatus for controlling driving of a vehicle and a vehicle. The method of controlling the driving of the vehicle includes receiving multi-view images including image frames at consecutive time points corresponding to a driving environment of the vehicle, extracting bird's-eye view (BEV) features and map queries respectively corresponding to the consecutive time points for each of the image frames, generating a vectorized map by predicting and vectorizing map elements included in the image frames based on first memory tokens stored in a memory corresponding to queries of previous image frames of the image frames, the BEV features, and the map queries, and controlling the driving of the vehicle based on the vectorized map.

Start

Receive multi-view images including image frames at consecutive time points corresponding to driving environment of vehicle — 110

Extract BEV features and map queries respectively corresponding to consecutive time points for each of image frames — 120

Generate vectorized map by predicting and vectorizing map elements included in image frames based on first memory tokens stored in memory corresponding to queries of previous image frames of image frames, BEV features, and map queries — 130

Control driving of vehicle based on vectorized map — 140

End

FIG. 1

EP 4 651 095 A1

**Description**

BACKGROUND

1. Field

The following embodiments relate to a method and apparatus with vehicle driving control.

2. Description of Related Art

As neural networks develop, electronic devices in various fields may analyze input data and extract and/or generate valid information using neural network-based models. For example, using neural networks to predict road geometry (e.g. lanes, road markings, etc.) and construct high-quality maps is becoming a key task for safe autonomous driving. Static map elements included in a high-quality map are important pieces of information for autonomous vehicles applications such as lane keeping, path planning, and trajectory prediction. However, static map elements may be repeatedly occluded in underlying sensed data by various dynamic objects on the road.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method of controlling driving of a vehicle includes receiving multi-view images including image frames of a driving environment of the vehicle at consecutive time points, extracting bird's-eye view (BEV) features respectively corresponding to the consecutive time points for each of the image frames, extracting map queries respectively corresponding to the consecutive time points for each of the image frames, generating a vectorized map by predicting and vectorizing map elements represented in the image frames, the generating based on first memory tokens stored in a memory corresponding to queries of previously-processed image frames of the image frames, the BEV features, and the map queries, and controlling the driving of the vehicle based on the vectorized map.

Vectorized map generation is a technology that recognizes road information around an ego vehicle and generates a local map (e.g., including centerlines, lanes, crosswalks, and road boundary information) in a vectorized form. It is a technology that provides necessary information for core autonomous driving technologies such as path planning and lane detection.

Embodiments of the present invention are based *inter alia* on the insight that all map information present on the road needs to be generated regardless of the presence of dynamic objects in the surroundings. However, there are often cases where map information is occluded by dynamic objects, such as surrounding vehicles, making it impossible to accurately generate a vectorized map. Therefore, it is difficult to expect the generation of a highly accurate vectorized map by only using information at a single time point.

In the case of consecutive time points, it is possible to obtain map information that is lacking from sensors at other time points. Since a map is static, it will have the same map information at the same global position, even if a time point changes. By using this characteristic, map information obtained at different time points may be utilized at the time point.

In conventional multiple time points-based vectorized map generation methods, during test time (inference), the ego vehicle's pose information is needed in the same way as during training. Moreover, the information that may be obtained from previous time point is limited. Further, conventional methods require additional devices (e.g., a GPS and an IMU) to determine the extent of the vehicle's movement during training and test time in order to utilize information at other time points. Furthermore, in conventional methods information at other time points is not updated. Therefore, updated features may not be obtained at all time points.

In order to solve the above problems in the prior art, the present invention provides a method of generating a high-performance vectorized map using the same sensor information received over consecutive times and referencing feature exchange between time points. Further, the present invention provides a method of learning the same shape characteristics by analyzing the temporal consistency of map elements across consecutive time points.

In view of the above, the present invention utilizes single or multi-sensor information received over consecutive times to obtain map information that cannot be detected at each time point due to obstacles by exchanging features with information at other time points. In addition, the present invention develops a method of generating a high-performance vectorized map at all time points received by defining and learning the same shape characteristics of vectorized map elements over consecutive time points.

Through the framework of the present invention, which receives single or multi-sensor information over consecutive times, exchanges the extracted features, and generates a vectorized map for each time point, it is possible to utilize rich map element information that cannot be obtained from a single time point. Through the method of the present invention, which learns the same shape characteristics of vectorized map elements over consecutive time points, the map generation results remain stable over time, and noise in the map generation results can be reduced.

The extracting of the BEV features and the map queries may include extracting image features of a perspective view (PV) corresponding to the image frames using a backbone network, transforming the image features of the PV into the BEV features, extracting the map queries at a frame level used to construct the vectorized map based on the BEV features and a query corresponding to the image frames, and outputting the BEV features and the map queries.

The generating of the vectorized map may include reading the first memory tokens; based on the map queries, the BEV features, and the first memory tokens, generating map tokens including the map elements included in the vectorized map and/or clip tokens including vectorized features corresponding to the image frames; and generating the vectorized map based on the map tokens.

The generating the map tokens and/or the clip tokens may include generating, from the map queries and the first memory tokens, the clip tokens including cues for the map elements in a feature space corresponding to the image frames, updating the BEV features using the clip tokens such that the BEV features include hidden map elements, and generating the map tokens using the updated BEV features and the map queries.

Sizes of the map queries may be determined based on sizes of the clip tokens, a number of the map elements, or a number of points for each of the map elements.

The updating of the BEV features may include extracting a query from the BEV features, extracting a key and a value from the clip tokens, and updating the BEV features via a cross-attention network and a feed-forward network using the query, the key, and the value.

The generating of the map tokens may include generating the map tokens from the map queries and the updated BEV features using a deformable attention network, a decoupled self-attention network, and a feed-forward network.

The generating of the map tokens may include generating the map tokens by extracting the queries from the map queries using the deformable attention network and obtaining a value from the updated BEV features.

The generating of the vectorized map may include generating the vectorized map by predicting the map elements represented in the image frames by a pre-trained neural network and vectorizing the map elements for each instance, and the pre-trained neural network may include at least one of a (2-1)-th neural network configured to read the first memory tokens from the memory or write second memory tokens to the memory and a second neural network configured to generate the vectorized map corresponding to a current frame among the image frames based on the map queries, the BEV features, and the first memory tokens.

The generating of the vectorized map may include writing the map tokens to the memory by the (2-1)-th neural network and generating the vectorized map as a map token corresponding to the current frame among the map tokens passes through a prediction head.

The method may further include generating the second memory tokens by writing the map tokens and the clip tokens to the memory using the first neural network and outputting the second memory tokens.

The (2-1)-th neural network may be configured to preserve time information corresponding to the previous image frames by reading first memory tokens corresponding to the previous image frames to propagate the first memory tokens as an input for the second neural network.

The (2-1)-th neural network may be configured to set intra-clip associations between the map elements by associating inter-clip information through propagation of clip tokens generated in the (2-2)-th neural network.

The (2-1)-th neural network may be configured to generate the second memory tokens including global map information through embedding of a learnable frame and store the second memory tokens in the memory, based on the map tokens and the clip tokens generated in the (2-2)-th neural network.

The (2-1)-th neural network may be configured to generate the second memory tokens by combining clip tokens, the map tokens, and the first memory tokens together.

The (2-2)-th neural network may be configured to generate the vectorized map by outputting a map token corresponding to a current frame having a predetermined time window corresponding to lengths of the image frames, based on the first memory tokens, the BEV feature, and the map queries.

The map elements may include a crosswalk, a road, a lane, a lane boundary, a building, a curbstone, or traffic lights included in the driving environment.

In another general aspect, an apparatus for controlling driving of a vehicle includes a communication interface configured to receive multi-view images of a driving environment of the vehicle at consecutive time points, a first neural network configured to extract BEV features respectively corresponding to the consecutive time points for each of the image frames, and configured to extract map queries respectively corresponding to the consecutive time points for each of the image frames a second neural network configured to generate a vectorized map by predicting and vectorizing map elements represented in the image frames, the generating based on first memory tokens stored in a memory corresponding to queries of previously-processed image frames, the BEV features, and the map queries, and a processor configured to control driving of the vehicle based on the vectorized map.

In another general aspect, a vehicle includes sensors configured to capture multi-view images including image frames at consecutive time points corresponding to a driving environment of the vehicle, a neural network configured to extract BEV features and map queries respectively corresponding to the consecutive time points for each of the image frames and generate a vectorized map by predicting and vectorizing map elements represented in the image frames based on first memory tokens stored in a memory corresponding to queries of previous image frames of the image frames, the BEV features, and the map queries, and a processor configured to generate a control signal for driving the vehicle based on the vectorized map.

Other features and aspects will be apparent from the following detailed description, the drawings, and the claims.

BRIEF DESCRIPTION OF THE DRAWINGS

FIG. 1 illustrates an example method of controlling driving of a vehicle, according to one or more embodiments.
FIG. 2 illustrates an example method of extracting bird's-eye view (BEV) features and queries, according to one or more embodiments.
FIG. 3 illustrates an example method of generating a vectorized map.
FIG. 4 illustrates an example of generating map tokens and/or clip tokens, according to one or more embodiments.
FIG. 5 illustrates an example framework of an apparatus for controlling driving of a vehicle, according to one or more embodiments.
FIG. 6 illustrates an example of clip tokens, according to one or more embodiments.
FIG. 7 illustrates an example implementation of a (2-2)-th neural network, according to one or more embodiments.
FIG. 8 illustrates an example method of controlling driving of a vehicle, according to one or more embodiments.
FIG. 9 illustrates an example framework of an apparatus for controlling driving of a vehicle, according to one or more embodiments.
FIG. 10A illustrates an example of structure and operation of an apparatus for controlling driving of a vehicle, according to one or more embodiments.
FIG. 10B illustrates an example in which a control apparatus is mounted on a vehicle and recognizes a lane during driving, according to one or more embodiments.
FIG. 11 illustrates an example of an operation of a feature exchange module, according to one or more embodiments.
FIG. 12 illustrates an example of an operation of a map element generation module, according to one or more embodiments.
FIG. 13 illustrates an example method of designing a loss for training a neural network, according to one or more embodiments.
FIG. 14 illustrates an example apparatus for controlling driving of a vehicle, according to one or more embodiments.
FIG. 15 illustrates an example vehicle, according to one or more embodiments.

Throughout the drawings and the detailed description, unless otherwise described or provided, it may be understood that the same or like drawing reference numerals refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

Examples described below may be used to generate visual/image information for assisting the steering of an autonomous or assisted-driving vehicle in an augmented reality navigation system of a smart vehicle. The examples may be utilized in systems utilizing cameras such as front facing cameras, multi-cameras, and surround view monitor (SVM) systems for autonomous driving or an advanced driver assistance system (ADAS) and systems utilizing Lidar and/or a radar for autonomous driving or an ADAS. In addition, the examples may be used to assist safe and comfortable driving by interpreting visual information through a device including an intelligent system, such as a head up display (HUD) that is installed in a vehicle for driving assistance or fully autonomous driving. The examples may be applied to autonomous vehicles, intelligent vehicles, smartphones, navigation, mobile devices, and the like. The aforementioned systems and applications are non-limiting examples.

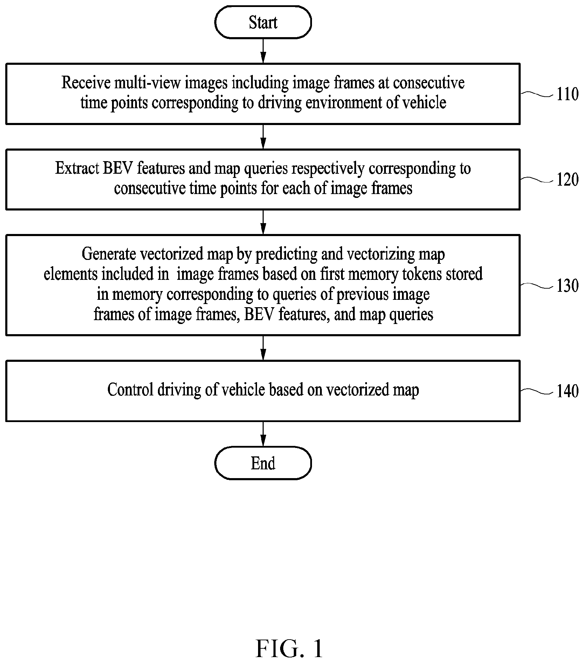

FIG. 1 illustrates an example of controlling driving of a vehicle, according to one or more embodiments.

Referring to FIG. 1, an apparatus for controlling driving of a vehicle (hereinafter, "control apparatus") may control the driving of the vehicle based on a vectorized map through operations 110 to 140.

In operation 110, the control apparatus may receive multi-view images including image frames at consecutive time points of a vehicle driving in a driving environment . The vehicle may be, for example, an intelligent vehicle equipped with an ADAS and/or an autonomous driving (AD) system that recognizes and/or determines situations of the driving environment during driving using sensors, an image processing device, a communication device, and the like to control the operation of the vehicle and/or to notify a driver of the situations. The ADAS and/or the AD system may recognize, based on a driving image captured by a camera, a stationary object on a driving road, a road surface marking including a lane, a road sign, and/or the like.

The vehicle may correct its position or trajectory by mapping (i) a target distance estimated based on an image frame obtained from the camera by the ADAS to (ii) pre-built map information, and may do so while correcting representations of lanes ("lanes" for short) of the driving road recognized by the vehicle and driving information related to the lanes. Additionally, the vehicle may receive, through a navigation system (local and/or remote), various pieces of driving information including a recognized lane related to the driving road.

The vehicle may be any type of transportation used to move a person or an object with a driving engine, such as a car, a bus, a motorcycle, or a truck, as non-limiting examples. The vehicle may also be referred to as an "ego vehicle".

The multi-view images may be synchronized image frames at consecutive time points. Three consecutive time points may be a time point t-2, a time point t-1, and a time point t. When the time point t-1 corresponds to a current time point, the time point t-2 may correspond to a previous time point and the time point t may correspond to a subsequent time point. Image frame(s) may be, for example, image frames of a driving image including a vehicle, a lane, a curb, a sidewalk, a surrounding environment, a stationary object, and/or the like. The image frames may be obtained using a capturing device (e.g., a single camera or multiple cameras) mounted on the front of a vehicle (e.g., an ego vehicle) but are not limited thereto. In this case, calibration information of the capturing device may be assumed to be already known. For example, the capturing device may include a mono camera, a vision sensor, an image sensor, or a device for performing a similar function. Alternatively, an image frame may be an image captured by a capturing device included in the control apparatus or by a device other than the control apparatus. The image frames may include not only a stationary object such as a road, a road sign, and a lane, but may also include a moving object, such as a pedestrian or another vehicle driving around the vehicle. A road may be a path along which vehicles travel, for example, a highway, a national road, a local road, an expressway, or an exclusive automobile road. A road may include one or more lanes. A road on which the vehicle is driving will sometimes be referred to as a "driving road". A lane may be a road space that is differentiated from another through lanes marked on the road surface. A lane may be distinguished by lane lines left and/or right of the lane. A road sign may be, for example, a speed sign, a distance sign, or a milestone, but is not limited thereto.

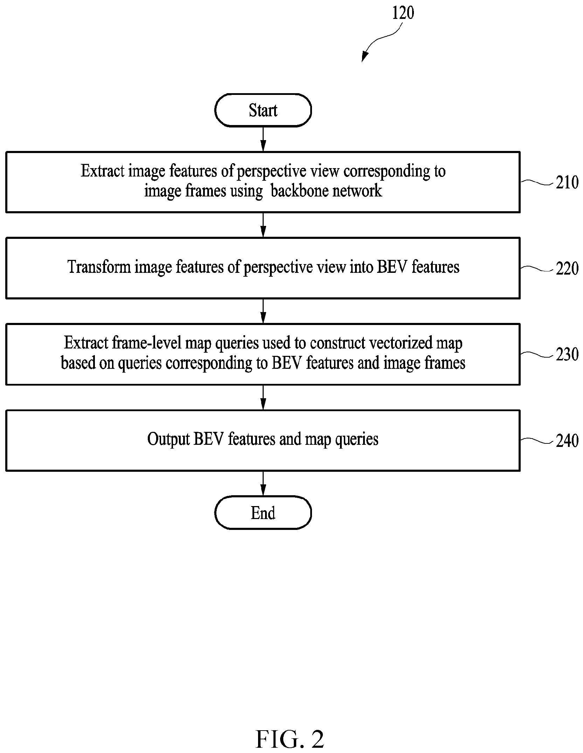

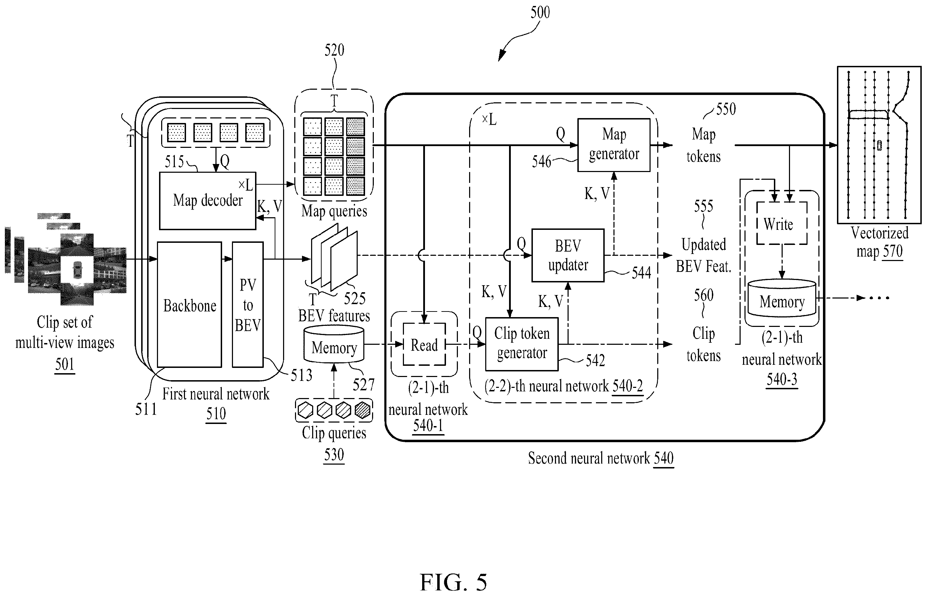

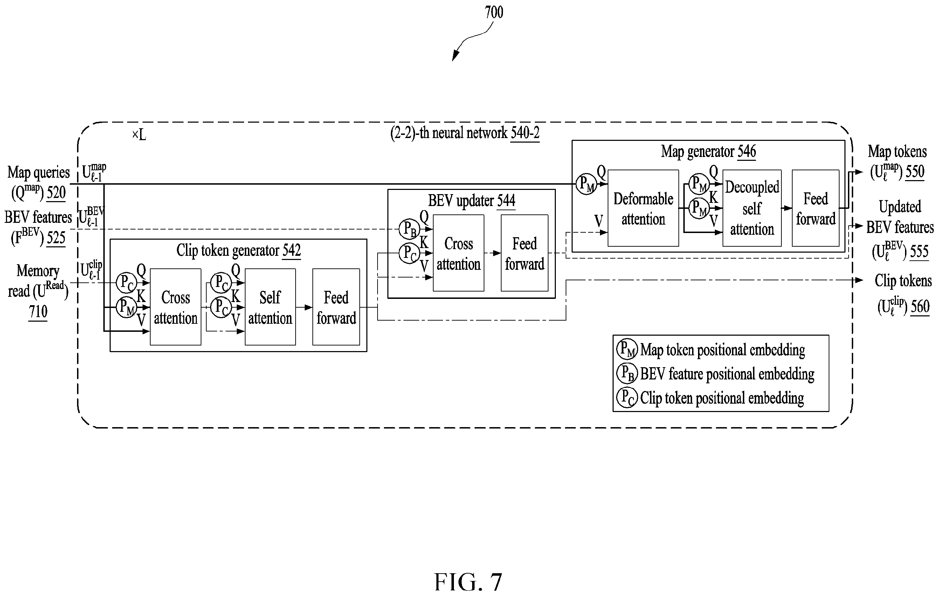

In operation 120, the control apparatus may extract bird's-eye view (BEV) features and map queries respectively corresponding to consecutive time points for each of the image frames. The BEV features and the map queries may be extracted by, for example, a first neural network 510 illustrated in FIGS. 5 and 7 below. A method by which the control apparatus may extract BEV features and queries is described with reference to FIGS. 2 and 5.

In operation 130, the control apparatus may generate a vectorized map by predicting and vectorizing map elements (described later) included in the image frames, where the predicting is based on (i) first memory tokens (described below) stored in a memory corresponding to queries of previous image frames (among the image frames), (ii) the BEV features, and (iii) the map queries. The vectorized map may be a local map of vector data representing, for example, a center line, a lane, a crosswalk, and road boundary information, and generated in vector form by recognizing road information around the ego vehicle. The vectorized map may include, for example, information indicating classes of map elements, coordinates information of map elements, and directions of map elements. The map elements may include a crosswalk, a road, a lane, a lane boundary, a building, a curb, a road sign, traffic lights, or the like included in a high-resolution map or the vectorized map corresponding to the driving environment but are not limited thereto. The map elements may have unique indices respectively corresponding to the consecutive time points. The vectorized map may be output in the form of a point cloud, for example, a vectorized map 570 illustrated in FIG. 5, but is not limited thereto.

The control apparatus may generate the vectorized map by (i) predicting map elements included in image frames (by a pre-trained neural network) and (ii) vectorizing each predicted map element instance. In this case, the pre-trained neural network may include at least one of (2-1)-th neural networks 540-1 and 540-3 and a (2-2)-th neural network 540-2 illustrated in FIGS. 5 and 7 ("2-1" refers to a first part of the second neural network, and "2-2" refers to a second part of the second neural network). Here, an instance (e.g., object) may correspond to an individual component of the high-resolution map or the vectorized map. An instance may include, for example, map elements such as a road, a lane, traffic lights, a curb, a crosswalk, and the like but is not necessarily limited thereto. In addition, an instance may further include various objects included in the driving image of the vehicle.

As described in more detail below, the (2-1)-th neural network 540-1 may read/receive the first memory tokens from the memory using a token summarizer. Additionally, the (2-1)-th neural network 540-3 may write second memory tokens to the memory using the token summarizer. Here, the token summarizer may select and summarize valid and important tokens from among map tokens 550, clip tokens 560, and the first memory tokens. The (2-2)-th neural network 540-2 may generate the vectorized map corresponding to a current frame (among the image frames) based on the map queries, the BEV features, and the first memory tokens. The control apparatus may write the map tokens to the memory by the (2-1)-th neural network 540-3 and generate the vectorized map as a map token, which corresponds to the current frame among the map tokens written to the memory, passes through a prediction head.

As described in more detail below, the (2-1)-th neural networks 540-1 and 540-3 may preserve temporal information corresponding to the previous image frames by reading the first memory tokens corresponding to the previous image frames and propagating the first memory tokens as input to the (2-2)-th neural network 540-2. The (2-1)-th neural network 540-3 may establish intra-clip associations among the map elements by associating inter-clip information through propagation of clip tokens generated in the (2-2)-th neural network 540-2. In addition, the (2-2)-th neural network 540-2 may generate the vectorized map by outputting a map token corresponding to the current frame having a predetermined time window corresponding to the lengths of the image frames based on the first memory tokens, the BEV features, and the map queries.

In operation 140, the control apparatus may control the driving of the vehicle based on the vectorized map. The control apparatus may control the driving of the vehicle by generating various control parameters for autonomous driving of the vehicle, such as vehicle path setting, lane detection, vehicle steering, vehicle driving, and vehicle driving assistance, based on the vectorized map.

FIG. 2 illustrates an example method of extracting BEV features and queries, according to one or more embodiments. Referring to FIG. 2, a control apparatus may extract BEV features and queries through operations 210 to 240.

In operation 210, the control apparatus may extract image features of a perspective view (PV) corresponding to image frames using, for example, a backbone network 511 illustrated in FIG. 5. The backbone network 511 may function as an encoder that encodes the image features.

In operation 220, the control apparatus may transform the image features of the PV extracted in operation 210 into BEV features. The control apparatus may transform the image features of the PV into BEV features using, for example, a PV-to-BEV transformer 513 illustrated in FIG. 5. The PV-to-BEV transformer 513 may transform the image features of the PV into feature vectors of a BEV space, that is, BEV features, using, for example, an inverse perspective mapping (IPM) technique, but is not limited thereto. The IPM technique may involve removing a perspective effect from an input image (image frame) and/or a segmentation image having a perspective effect and transforming position information on an image plane (e.g., in three dimensions, similar to a projection) into position information in a world coordinate system.

In operation 230, the control apparatus may extract frame-level map queries (which are used to construct a vectorized map), and the extracting may be based on queries Q corresponding to the BEV features (the BEV features obtained from the transformation in operation 220) and based on the image frames. The control apparatus may extract the frame-level map queries using, for example, a map decoder 515 illustrated in FIG. 5. The map decoder 515 may be, for example, a prediction head that decodes a feature vector and outputs an instance. The size of the map queries may be determined based on, for example, the size of clip tokens, the number of predicted map elements, and/or the number of points per map element but is not limited thereto.

In operation 240, the control apparatus may output the BEV features from the transformation in operation 220 and may output the map queries extracted in operation 230.

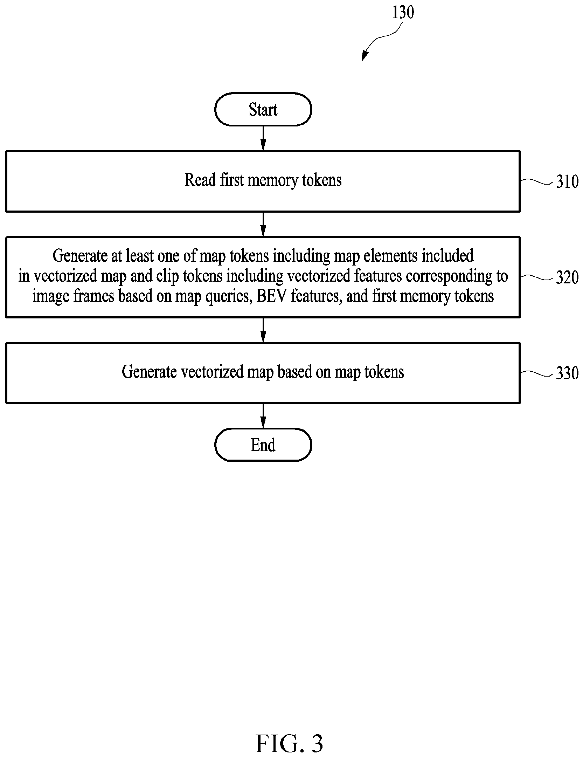

FIG. 3 illustrates an example method of generating a vectorized map, according to one or more embodiments. Referring to FIG. 3, a control apparatus may generate a vectorized map through operations 310 to 330.

In operation 310, the control apparatus may read first memory tokens. The first memory tokens may be information corresponding to image frames of a previous time point. The first memory tokens may be tokens stored in a memory corresponding to queries of previous image frames (one or more image frames of previous time point(s)). The first memory tokens may be clip tokens and map tokens stored in the memory (which corresponds to queries of image frames at previous time points) or may be tokens in the processed form of these (clip tokens and map tokens).

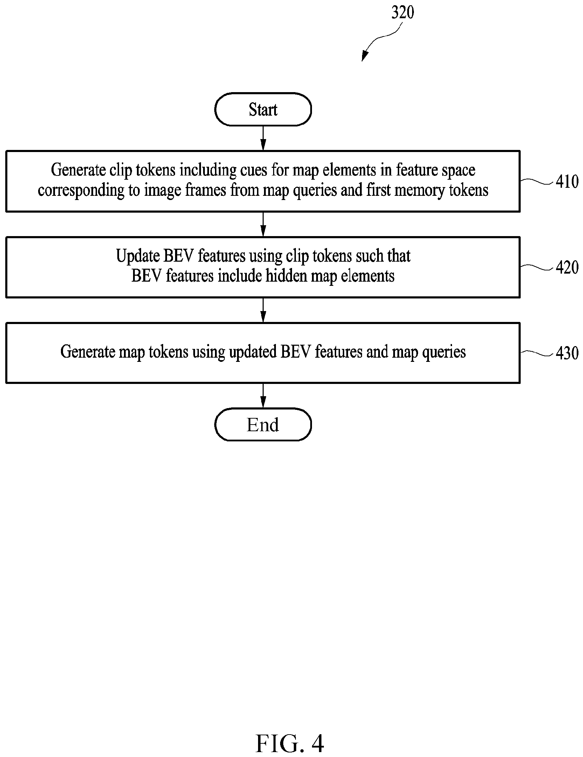

In operation 320, the control apparatus may generate at least one of (i) map tokens including map elements included in the vectorized map and (ii) clip tokens including vectorized features corresponding to the image frames based on the map queries output in operation 240, (iii) BEV features, and (iv) the first memory tokens read in operation 310. Here, clip token(s) may include cues for a temporal map element in a feature space. A method by which the control apparatus generates at least one of the map tokens and the clip tokens is described with reference to FIG. 4.

In operation 330, the control apparatus may generate the vectorized map based on the map tokens generated in operation 320. The control apparatus may generate the vectorized map by decoding map tokens with various learning matrices.

FIG. 4 illustrates an example method of generating map tokens and/or clip tokens, according to one or more embodiments. Referring to FIG. 4, a control apparatus may generate map tokens and/or clip tokens through operations 410 to 430.

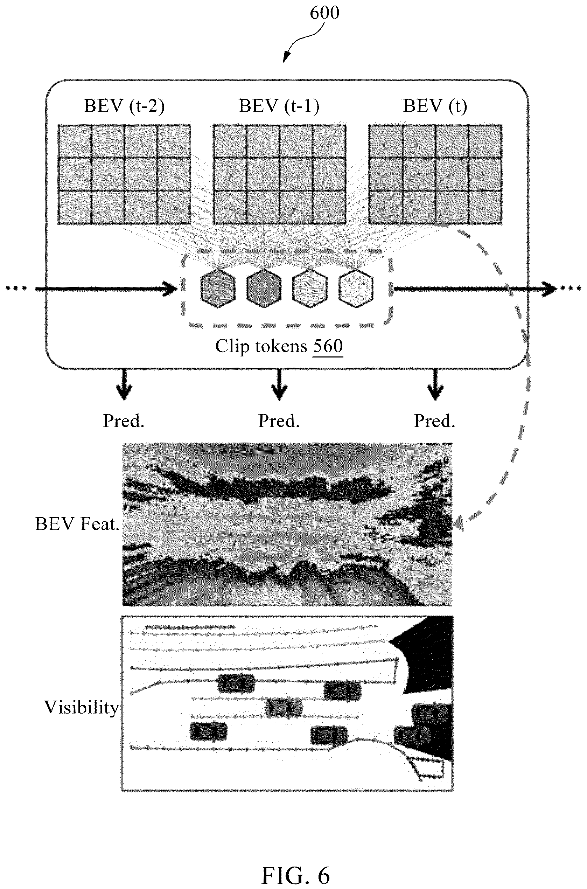

In operation 410, the control apparatus may generate clip tokens including cues for map elements in a feature space corresponding to image frames from map queries and first memory tokens. The control apparatus may generate the clip tokens, for example, by a clip token generator 542 illustrated in FIGS. 5 and 7. Clip tokens are described with reference to FIG. 6.

In operation 420, the control apparatus may update BEV features using the clip tokens generated in operation 410 such that the BEV features include hidden (occluded) map elements. A map generally represents static information and may thus have the same information or the same value at the same global/physical position even when a time point changes. The control apparatus may update the BEV features by utilizing, at a current time point, map information obtained at other time point(s) using the feature described above such that the BEV features include the hidden map elements. Here, the hidden map element(s) may be also referred to as "occluded map element(s)" because the hidden map element(s) are map elements occluded by dynamic objects such as nearby vehicles. Accordingly, the control apparatus may generate a single vectorized map with high accuracy by utilizing image information of multiple time points to generate the vectorized map.

The control apparatus may update the BEV features, for example, by a BEV updater 544 illustrated in FIGS. 5 and 7 using the clip tokens generated in operation 410. The control apparatus may extract a query Q from the BEV features and extract a key K and a value V from the clip tokens, for example. The control apparatus may update the BEV features via a cross-attention network and a feed-forward network using the query, the key, and the value.

In operation 430, the control apparatus may generate map tokens using the BEV features updated in operation 420 and the map queries extracted in operation 230. The control apparatus may generate the map tokens using, for example, a map generator 546 illustrated in FIGS. 5 and 7, but examples are not limited thereto. The control apparatus may generate the map tokens from the map queries and the updated BEV features using a deformable attention network, a self-attention network, and a feed-forward network. The control apparatus may extract a query from the map queries using the deformable attention network and generate the map tokens by obtaining values from the updated BEV features.

FIG. 5 illustrates an example of a framework for controlling driving of a vehicle, according to one or more embodiments. FIG. 5 illustrates a framework of a control apparatus 500 that outputs a clip-level vectorized high-definition (HD) map generated from clip-level multi-view images 501.

The control apparatus 500 may generate clip-level vectorized HD maps, that is, the vectorized map 570, from the clip-level multi-view images 501. Constructing the vectorized map 570 may be a task of predicting instance-wise vectorized representations of static map elements (e.g., a crosswalk, a lane divider, and a road boundary). The static map elements may be, for example, important/significant information for autonomous vehicle driving, for example, lane keeping, path planning, and trajectory prediction.

As used herein, the term "clip" refers to a set of features of a plurality (e.g., 3, 5, etc.) of consecutive time points, for example. In addition, the term "token" refers to a vectorized feature for a single clip, a map element, and/or the like. Also, a "multi-view image" may be an image consisting of sub-images joined together (as an overall image, or as a group), where the sub-images are captured by respective cameras having different views (hence "multi-view") at a same time point.

For example, when a set of synchronized multi-view images (e.g., a clip input) is input, the control apparatus 500 may sequentially construct the clip-level vectorized HD maps (e.g., each HD map may be derived from a corresponding given set of multi-view images). The control apparatus 500 may first extract, from the clip input, frame-level BEV features 525 and map queries 520 by the first neural network 510. The control apparatus 500 may independently extract the map queries 520 and the BEV features 525 in each image frame by the first neural network 510. The BEV features 525 are features that match an image view which may be ultimately displayed to a user and may appear in various forms such as a pixel value, a color, a texture, a shape, and the like. The BEV features 525 may play an important role in understanding and analyzing an image. The BEV features 525 may be also referred to as "rasterized features" since the BEV features 525 are pixel-based image features. The first neural network 510 may be, for example, an implementation of a frame-level MapNet and may use a MapTRv2 architecture but is not limited thereto.

Hereinafter, an operation of the first neural network 510 is described below in more detail.

The first neural network 510 may extract a clip set of the BEV features 525 and the map queries 520 from the synchronized multi-view images 501. The first neural network 510 may include, for example, the backbone network 511, the PV-to-BEV transformer 513, and the map decoder 515.

The backbone network 511 may extract image features of a PV corresponding to the image frames. The backbone network 511 may be, for example, a ResNet50 implementation but is not necessarily limited thereto. The first neural network 510 may transform the image features of the PV extracted by the backbone network 511 into the BEV features 525 through the PV-to-BEV transformer 513.

The PV-to-BEV transformer 513 may transform the image features of the PV corresponding to the multi-view images 501 into the BEV features 525. The PV-to-BEV transformer 513 may transform the image features of the PV into feature vectors of a BEV space, that is, the BEV features 525, using, for example, an IPM technique, but examples are not limited thereto.

The PV-to-BEV transformer 513 may extract integrated three-dimensional (3D) BEV features 525 encompassing the surrounding environment of the vehicle using various PV-to-BEV transformation techniques. The PV-to-BEV transformer 513 may use, for example, lift, splat, shoot (LSS)-based BEV feature pooling. The BEV features 525 may be utilized to query a map in the map decoder 515.

The map decoder 515 may output frame-level map queries 520 that may be directly used to construct the high-quality vectorized map 570 through the BEV features 525. The map decoder 515 may decode and predict the map queries 520 corresponding to the map elements from the BEV features 525 through a task-specific head.

The first neural network 510 may output the BEV features 525, which are the result of the PV-to-BEV transformer 513, and the map queries 520, which are the result of the map decoder 515, respectively.

Thereafter, the control apparatus 500 may generate the clip tokens 560 by applying the previously extracted information (e.g., the map queries 520 and the BEV features 525) as an input to the second neural network 540. The clip tokens 560 may include clip-level temporal map information and may interact directly with the dense BEV features 525.

In this case, the control apparatus 500 may establish long-term temporal relationships with the image frames of the current time point by employing the first memory tokens 530 written corresponding to a previous clip and stored in a memory 527. The first memory tokens 530 may be or may correspond to clip queries.

The control apparatus 500 may generate the clip tokens 560 which include clues of temporal map elements in a compact feature space by the second neural network 540 by employing the first memory tokens 530 read from the memory 527 and the map queries 520. The clip tokens 560 may correspond to clip-level map information. The clip tokens 560 are described in more detail with reference to FIG. 6. The control apparatus 500 may update the BEV features 525 by employing the clip tokens 560.

The control apparatus 500 may update the BEV features 525 by employing the clip tokens 560 such that the BEV features 525 may be generated to include hidden map elements (hidden with respect to the corresponding current time point of the multi-view images 501). The control apparatus 500 may reveal the hidden map elements by updating the BEV features 525 by employing the clip tokens 560. The size of the clip tokens 560 may be, for example, 50 (the number of vectors) x 256 (dimension per feature).

The control apparatus 500 may update the BEV features 525 using the BEV updater 544 of the second neural network 540 and generate the high-quality clip-level vectorized map 570 through updated BEV features 555. The control apparatus 500 may construct the high-quality clip-level vectorized map 570 by extracting the map tokens 550 using the updated BEV features 555.

After inferring the clip-level vectorized map 570, the control apparatus 500 may generate new second memory tokens by the (2-1)-th neural network 540-3 by employing the clip tokens 560, the map tokens 550, and current memory tokens (e.g., the first memory tokens 530). The control apparatus 500 may generate the second memory tokens by writing the map tokens 550 and the clip tokens 560 to the memory 527 using the (2-1)-th neural network 540-3.

For example, the size of the map tokens 550 may be, for example, 3 (T) x 50 (the number of vectors) x 256 (dimension per feature). The result of applying a learning matrix to the map tokens 550 may be 3 (T) x 50 (vector map) x [2(x,y) x 20 + the number of categories]. The size of the updated BEV features 555 may be, for example, 3 (T) x 100 (width) x 200 (height) x 256 (dimension per feature). Here, T denotes a time window (clip length).

When the size of the first memory tokens is 96 (the number of vectors) x 256 (dimension per feature), 3 (T) x 50 map queries 520 and 50 clip queries 530 and a total of 96 first memory tokens and 200 queries (96 + 200) may be reduced to 50 in the process of reading a memory.

The process of reading a memory may be performed in the form of "(1,2,3) -> (4,5,6) -> (7,8,9) -> ...", "(1,2,3) -> (2,3,4) -> (3,4,5) -> ...", or "(1,1,1) -> (1,1,2) -> (1,2,3) -> (2,3,4) -> (3,4,5) -> ...", to name some examples.

The control apparatus 500 may output the second memory tokens. The second memory tokens may be used to provide temporal clues for clip-level inference corresponding to subsequent sets of image frames following the current set of image frames.

The second neural network 540 may include, for example, the (2-1)-th neural network 540-1, the (2-2)-th neural network 540-2, and the (2-1)-th neural network 540-3. The (2-1)-th neural network 540-1 and the (2-1)-th neural network 540-3 may correspond to the same neural network.

The (2-1)-th neural networks 540-1 and 540-3 may read the first memory tokens 530 stored in the memory 527 or write the second memory tokens to the memory 527. The (2-1)-th neural network 540-1 may refer to a case in which the first memory tokens 530 are read from the memory 527. In addition, the (2-1)-th neural network 540-3 may refer to a case in which the second memory tokens are written to the memory 527.

The (2-1)-th neural networks 540-1 and 540-3 may preserve dense temporal information of a previous frame by propagating a token of a previous clip input to a subsequent clip input. The (2-1)-th neural network 540-3 may write the map tokens $U_l^{map}$ 550 and the clip tokens $U_l^{clip}$ 560 retrieved from the (2-2)-th neural network 540-2 to the memory. The (2-1)-th neural network 540-3 may efficiently manage long-term map information using a token turning machine (TTM). The TTM may be a sequential autoregressive transformer model with a memory for sequential visual understanding of the real world. The external memory of the TTM may include a set of tokens summarizing the previous history (i.e., frames). A memory module of the TTM may ensure that new observations are processed along with the content of the memory (rather than the entire history), allowing a long sequence to be processed efficiently at each step with limited computational cost. The (2-1)-th neural networks 540-1 and 540-3 may be referred to as an "Inter-clip Unveiler" (a network that unveils information between clips).

The (2-1)-th neural networks 540-1 and 540-3 may, for example, read the first memory tokens 530 stored in the memory 527 using a token summarizer or write the second memory tokens to the memory 527.

The (2-2)-th neural network 540-2 may generate a vectorized map corresponding to a current frame (e.g., t frame). The (2-2)-th neural network 540-2 may generate the vectorized map 570 corresponding to the current frame among the image frames based on the map queries 520, the BEV features 525, and the first memory tokens 530. The (2-2)-th neural network 540-2 may include, for example, the clip token generator 542, the BEV updater 544, and the map generator 546. A structure and an operation of the (2-2)-th neural network 540-2 are described in more detail below with reference to FIG. 7.

The (2-1)-th neural network 540-3 may establish an intra-clip connection (information exchange) between map elements by transmitting inter-clip tokens to the BEV features 525 of the subsequent image frame. The (2-1)-th neural network 540-3 may generate the second memory tokens by combining the clip tokens 560, the map tokens 550, and the first memory tokens 530. The (2-1)-th neural network 540-3 may generate the second memory tokens including global map information through embedding of a learnable frame, based on the map tokens 550 and the clip tokens 560 generated in the (2-2)-th neural network 540-2, and store the second memory tokens in the memory 527. The (2-1)-th neural network 540-3 may manage map information for the second memory tokens stored in the memory 527 using the TTM.

The (2-1)-th neural network 540-3 may establish a global relation by generating the second memory tokens employing tokens (e.g., the map tokens 550 and the clip tokens 560) generated in the (2-2)-th neural network 540-2.

The reading process in the second neural network 540 may be as follows. The second neural network 540 may generate compact clip tokens 560 including global map information by reading the first memory tokens 530 and the map queries 520. The second neural network 540 may read the first memory tokens 530 and the map queries 520 using the token summarizer that efficiently selects an information token from an input following the TTM. The second neural network 540 may perform positional embedding using a position-based memory addressing technique. The positional embedding is described in more detail below.

The memory is not available in a first/initial clip-level pipeline of the second neural network 540, so, initially, the first memory token 530 may be written through learnable clip embedding.

In addition, a writing process in the second neural network 540 may be as follows.

The second neural network 540 may perform a write operation for the memory using the token summarizer. A new second memory token $U_{t-S:t}^{memory} \in \mathbb{R}^{M \times C}$ may be generated by summarizing the clip tokens $U_{L}^{clip}$ 560, the map tokens $U_{L}^{map}$ 550, and the first memory tokens $U_{t-2S:t-S}^{memory}$ 530. Here, *M* denotes the size of memory tokens. C denotes a dimension corresponding to one feature, and L denotes an L-th level of a deep neural network. In addition, t-S denotes a time point S frames before a current t time point, and t-2S denotes a time point 2S frames before the current t time point.

The second memory tokens newly generated through the write operation may be used for a read operation for the first layer of the (2-2)-th neural network 540-2 in the subsequent clip-by-clip processing. The control apparatus 500 may perform the write operation using the same position-based memory addressing technique as the one used in the read operation. The write operation may be applied to the last layer of the (2-2)-th neural network 540-2, generating new second memory tokens, thereby preserving/propagating information about the clip tokens $U_{L}^{clip}$ 560 and the map tokens $U_{L}^{map}$ 550.

The control apparatus 500 may efficiently execute the clip-level pipeline by avoiding redundant computations due to a temporal stride while the second neural network 540 establishes a global map relationship.

The second neural network 540 may efficiently perform online inference by collecting clip-level temporal map information and learning differentiable associations.

The clip-level pipeline may be introduced/employed to infer the second neural network 540 online by mapping the BEV features 525 within a clip set and propagating the map information to a subsequent timestamp, thereby building a global map efficiently.

The second neural network 540 may perform clip-level inference NT/S times for a sequence of NT frames by performing efficient inference using a temporal stride S based on the clip-level pipeline. The structure and the operation of the (2-2)-th neural network 540-2 are described in more detail with reference to FIG. 7.

The second neural network 540 may be a framework designed to reveal invisible map information that may not be captured with frame-level BEV features 525 alone (in the current input images). To avoid heavy computations, the control apparatus 500 may perform clip-by-clip inference using a time window (clip length) T and a stride S.

The first neural network 510 may be built based on the frame-level MapTRv2 architecture, so a loss function used in, for example, MapTR and MapTRv2, may be used for training the first neural network 510. In addition, one2one loss and auxiliary dense prediction losses may be additionally used for training the first neural network 510.

For example, a classification loss, a point2point loss, an edge direction loss, and the like may be used for training the second neural network 540.

FIG. 6 illustrates an example of clip tokens, according to one or more embodiments. FIG. 6 illustrates a diagram 600 showing the clip tokens 560 respectively corresponding to BEV features of three consecutive time points (e.g., the time point t-2, the time point t-1, and the time point t).

As described above, a set of image features of consecutive time points may be called a "clip", and vectorized features for one clip may be called a "token". In other words, the clip tokens 560 may correspond to vectorized features for images at consecutive time points and may include cues for temporal map elements in a feature space.

A control apparatus may allow hidden map elements visible in a predetermined frame to be expressed by generating compact clip tokens 560 including temporal map information within a clip input and updating BEV features respectively corresponding to consecutive time points by the clip tokens 560.

The control apparatus may reveal/convey the hidden map elements through interactions between the clip tokens 560 and the BEV features containing upper level map information. The control apparatus may establish intra-clip associations between map elements by associating inter-clip information through propagation of the clip tokens 560.

The control apparatus may update and visualize/express hidden (or occluded) BEV features through 1D principal component analysis (PCA) projection based on the clip tokens 560, for example. In this case, the BEV features may be extracted from the second neural network.

FIG. 7 illustrates an example implementation of a (2-2)-th neural network, according to one or more embodiments. Diagram 700 shows detailed structure and operation of the (2-2)-th neural network. The (2-2)-th neural network 540-2 may be referred to as an "Intra-clip Unveiler".

The (2-2)-th neural network 540-2 may include a sequence of L layers. The (2-2)-th neural network 540-2 may include, for example, the clip token generator 542, the BEV updater 544, and the map generator 546. Each of the clip token generator 542, the BEV updater 544 and the map generator 546 may include various attention layers and feed forward layers. In each attention layer and feed forward layer, ordinary layer normalization, dropout, residual connections, and the like may be performed, for example.

The (2-2)-th neural network 540-2 may output the map tokens 550, the updated BEV features 555, and the clip tokens 560 using a clip set including frame-level map queries 520, $Q^{map}$, the BEV features 525, $F^{BEV}$, and memory read 710, $U^{Read}$.

The clip token generator 542 may generate compact clip tokens 560 by the first memory tokens 530 read from the memory and the map queries 520. The clip token generator 542 may extract a query Q from the first memory tokens 530 and extract a key K and a value V from the map queries 520.

The query, key, and value extracted by the clip token generator 542 may be used to generate the clip tokens 560 through positional embedding in the process of passing through a cross attention layer, a self-attention layer, and a feed forward layer of the clip token generator 542.

The clip token generator 542 may generate the clip tokens $U_l^{clip} \in \mathbb{R}^{N_c \times C}$ 560 from the frame-level map queries $Q^{map} \in \mathbb{R}^{T \times N_i \times N_p \times C}$ 520. Here, $N_c$ denotes a clip token size, $N_i$ denotes the number of map elements predicted by the first neural network, and $N_p$ denotes the number of points per map element (pixel). The control apparatus may enable online mapping in the following/later steps by obtaining compact representations including map information by the clip tokens 560 generated by the clip token generator 542.

The BEV updater 544 may express hidden map elements by updating the BEV features $F^{BEV} \in \mathbb{R}^{T \times H \times W \times C}$ 525 using the clip tokens $U_l^{clip}$ 560 generated by the clip token generator 542. The BEV updater 544 may extract the query Q from the BEV features 525 and extract the key K and the value V from the clip tokens 560 generated by the clip token generator 542. The query, key, and value extracted by the BEV updater 544 may be used to generate the updated BEV features 555 through positional embedding, which may be done in the process of passing through the cross attention layer and feed forward layer of the BEV updater 544.

The BEV updater 544 may update the BEV features 525 through the clip tokens 560 corresponding to hidden region(s) associated with the original BEV features 525 and output the updated BEV features $U_l^{BEV} \in \mathbb{R}^{T \times H \times W \times C}$ 560. The updated BEV features $U_l^{BEV}$ 560 may be used as a value in the map generator 546.

The map generator 546 may generate and/or output the clip-level map tokens $U_l^{map} \in \mathbb{R}^{T \times N_i \times N_p \times C}$ 550 using the updated BEV features $U_l^{BEV}$ 555 generated by the BEV updater 544. The map generator 546 may include a deformable attention layer, a decoupled self-attention layer, and a feed forward layer.

The map generator 546 may extract a query Q from the map queries $Q^{map}$ 520 by the deformable attention layer and extract a value V from the updated BEV features $U_l^{BEV}$ 555. In addition, the decoupled self-attention layer may extract a key from the output of the deformable attention layer. The query, key, and value extracted by the map generator 546 may be used to generate the map tokens $U_l^{map}$ 550 through positional embedding in the process of passing through the deformable attention layer, the decoupled self-attention layer, and the feed forward layer of the map generator 546. The map tokens $U_l^{map}$ 550 may be directly used when the control apparatus constructs vectorized HD maps using perception heads.

While a standard transformer structure is permutation-invariant, position information combined with temporal information may be used to predict map elements at a clip level (e.g., on a per-clip basis).

The control apparatus 500 may use fixed 3D sinusoidal positional embedding for the BEV features. The control apparatus 500 may use learnable positional embedding used in a frame-level first neural network with newly defined learnable temporal positional embedding for the map tokens. The control apparatus 500 may define new learnable positional embedding for the clip tokens. Similarly, the control apparatus 500 may define learnable positional embedding for memory tokens (e.g., the first memory tokens 530 and the second memory tokens) used to read and write the (2-1)-th neural networks 540-1 and 540-3.

The map tokens $U_l^{map}$ 550 are written to the memory of the (2-1)-th neural network 540-3, and when a map token $U_l^{map}$ of an L-th layer passes through a prediction head, the vectorized map 560 may be generated.

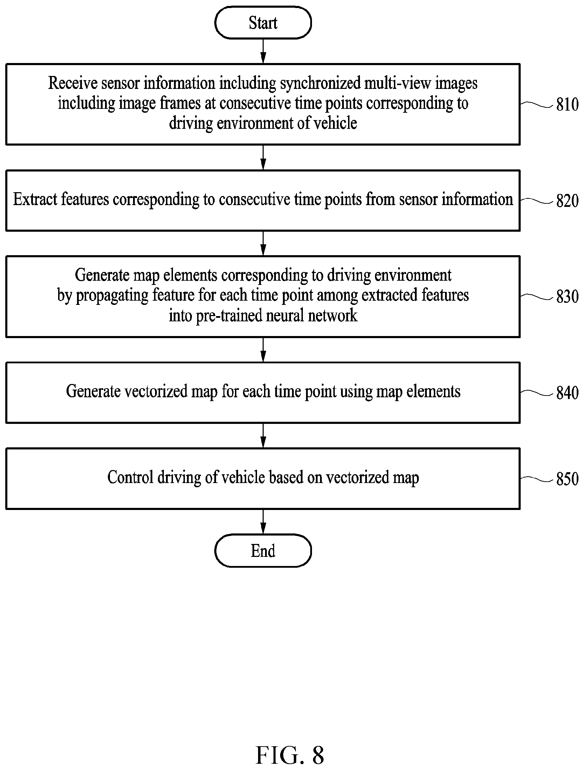

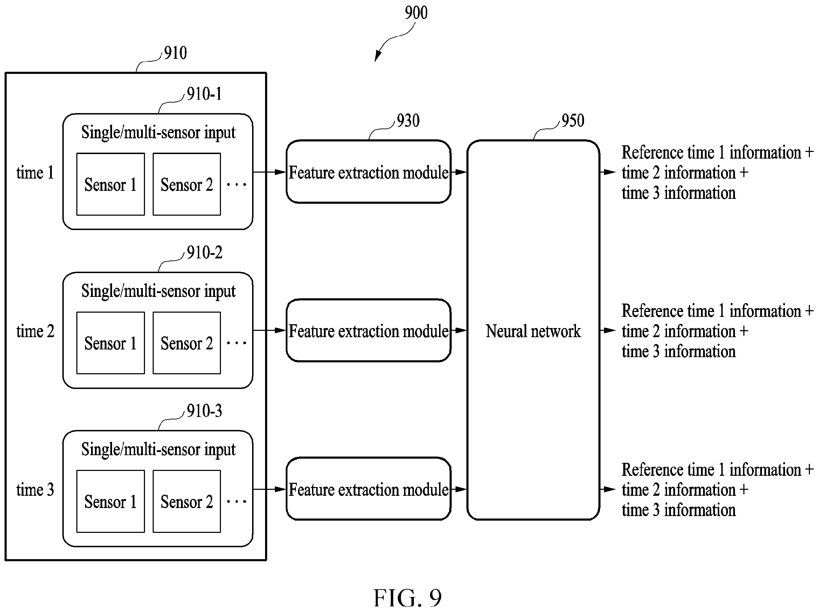

FIG. 8 illustrates an example method of controlling driving of a vehicle, and FIG. 9 illustrates an example of a framework of an apparatus for controlling driving of a vehicle, according to one or more embodiments.

Referring to FIGS. 8 and 9, a control apparatus may control driving of a vehicle based on a vectorized map through operations 810 to 850.

In operation 810, the control apparatus may receive sensor information 910 including synchronized multi-view images (e.g., 910-1, 910-2, and 910-3) including image frames at consecutive time points (e.g., time 1, time 2, and time 3) corresponding to a driving environment of the vehicle. The sensor information may be detected by various single sensors or multiple sensors such as a camera sensor, a vision sensor, a Lidar sensor, a multi-camera sensor, and a radar sensor.

In operation 820, the control apparatus may extract features corresponding to the consecutive time points from the sensor information 910 received in operation 810. The control apparatus may extract features by, for example, the first neural network 510 described above with reference to FIG. 5 or a feature extraction module 930, but examples are not limited thereto.

In operation 830, the control apparatus may generate map elements corresponding to the driving environment by propagating a feature for each time point among the features extracted in operation 820 into a pre-trained neural network 950. The control apparatus may obtain map information corresponding to an occluded region at each time point by inputting the features extracted in operation 820 into the pre-trained neural network 950.

More particularly, the control apparatus may identify map information at different times including each time point by combining (or exchanging) the features extracted in operation 820. The control apparatus may identify the map information at different times by combining the features extracted by the pre-trained neural network 950. The control apparatus may update the features extracted in operation 820 using the map information at different times. In this case, the pre-trained neural network 950 may be either a transformer or a 3D convolutional neural network (CNN) that allows referencing multiple pieces of time information, but examples are not limited thereto. The pre-trained neural network 950 may be, for example, the second neural network 540 described above with reference to FIG. 5.

The control apparatus may define a prompt used to generate map elements for map information for each time point. The control apparatus may obtain map information using the prompt (as defined for each time point) and the combined (or exchanged) features. The control apparatus may generate map elements at all time points simultaneously using the prompt defined for each time point and an updated feature. The control apparatus may generate map elements at all time points simultaneously from a prompt based on the updated feature using a DNN-based transformer decoder, for example. In this case, prompts with the same index among the prompts defined for each time point may generate the same map elements.

The control apparatus may generate the map elements by defining the same shape characteristic of map elements at consecutive time points using the obtained map information. The map elements may have unique indices respectively corresponding to the time points. Map elements generated at the same index at each time point may generate map elements that are the same as map elements generated at different time points.

In operation 840, the control apparatus may generate a vectorized map for each time point using the map elements generated in operation 830.

In operation 850, the control apparatus may control driving of the vehicle based on the vectorized map generated in operation 840.

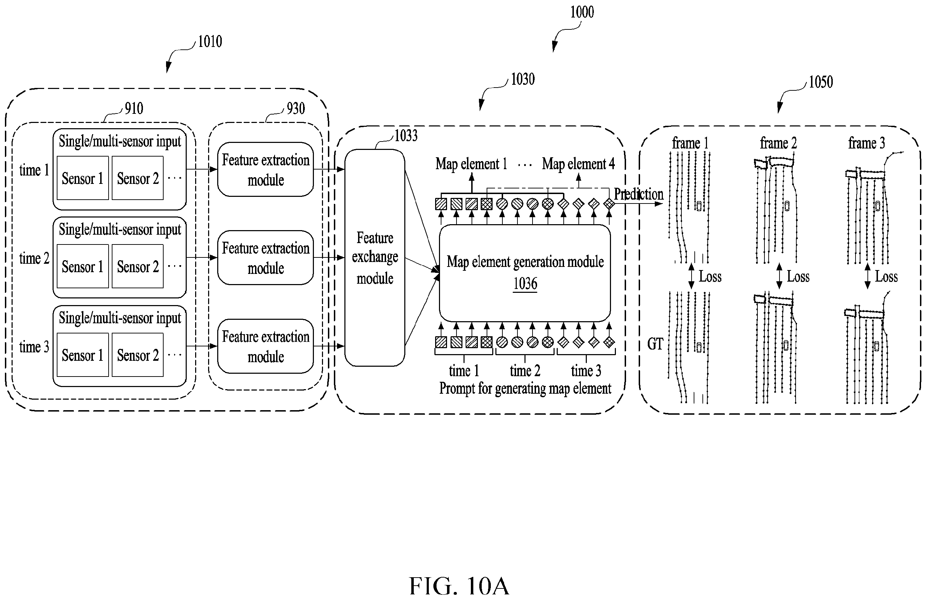

FIG. 10A illustrates an example of structure and operation of a control apparatus 1000 for controlling driving of a vehicle, according to one or more embodiments.

The control apparatus 1000 may allow a neural network 1030 to learn the same shape characteristic of map elements included in a vectorized map at consecutive time points based on features extracted by the feature extraction module 930 from single and/or multi-sensor information 910 received at consecutive times, thereby allowing the neural network 1030 to generate a high-performance vectorized map 1050 for each time point.

The neural network 1030 may include a feature exchange module 1033 that performs feature exchange between the single and/or multi-sensor information 910 at consecutive time points and a map element generation module 1036 that predicts and/or generates map elements included in the vectorized map at consecutive time points. The control apparatus 1000 may analyze temporal consistency of the map elements at consecutive time points to enable the neural network 1030 to learn the same shape characteristic of the map elements.

The acquisition of single and/or multi-sensor information 910 and the feature extraction by the feature extraction module 930 may be performed by a feature extraction part 1010.

The feature extraction part 1010 may extract features from single or multi-sensor information received for a continuous period of time.

The feature exchange module 1033 may identify information on map elements occluded at different times by exchanging the features extracted at each time.

The map element generation module 1036 may define a prompt for generation of map elements included in the vectorized map for each time and may generate map elements by features identified through exchanges between map elements at different times.

The control apparatus 1000 may predict the vectorized map 1050 corresponding to each time point by the map elements. The control apparatus 1000 may train the neural network 1030 based on the comparison result between the vectorized map 1050 and a ground truth (GT).

The control apparatus 1000 may generate a vectorized map for each time point by exchanging or combining features between each time point using the same sensor information received at consecutive times. The control apparatus 1000 may analyze temporal consistency between map elements at consecutive time points to enable the neural network 1030 to learn the same shape characteristic.

More particularly, the feature extraction part 1010 may extract features (Ft) at each time point through the feature extraction module (Enc) 930 as in Equation 1 below by receiving the single and/or multi-sensor information 910 (e.g., vehicle surrounding information (St)) from a single sensor or multiple sensors at consecutive time points.

Equation 1

$$F_t = Enc(S_t), \quad t = 1, 2, \dots, T$$

Various types of sensors that may recognize map information, such as a camera, a Lidar, and a radar, may be used as a single sensor or multiple sensors. The feature extraction module 930 may correspond to, for example, a DNN-based encoder. The feature extraction module 930 may correspond to various types of neural networks or encoders capable of extracting features from sensor information, such as CNNs and a transformer.

The control apparatus 1000 may generate an improved feature at each time point by exchanging features $F_t$ at respective time points through the feature exchange module (*Comm*) 1033 as in Equation 2 below.

Equation 2

$$\left\{\hat{F}_1, \hat{F}_2, \dots, \hat{F}_T\right\} = Comm(\{F_1, F_2, \dots, F_T\})$$

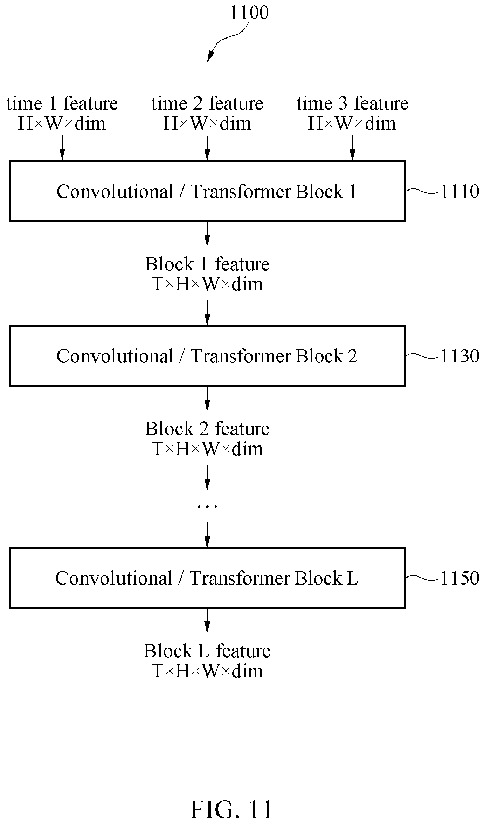

The control apparatus 1000 may exchange features in images at respective time points such that a feature at another time point may compensate for map information occluded by an obstacle at a current time point. The feature exchange module (*Comm*) 1033 may use various neural network modules capable of processing spatiotemporal data, such as DNN-based 3D CNNs and a 3D transformer. The operation of the feature exchange module (*Comm*) 1033 is described in more detail below with reference to FIG. 11.

The map element generation module 1036 may define $N$ prompts ($Q_{n,t}$) for generating map elements at each time point (t). The prompt ($Q_{n,t}$) may generate N map elements ($\hat{F}_t$) corresponding to respective time points as in Equation 3 below with reference to the feature ($M_{n,t}$) improved through the map element generation module (*Dec*) 1036.

Equation 3

$$\left\{M_{1,1}, M_{1,2}, \dots, M_{1,T}, M_{2,1}, \dots, M_{N,T}\right\} = Dec\left(\{Q_{1,1}, Q_{1,2}, \dots, Q_{1,T}, Q_{2,1}, \dots, Q_{N,T}\}, \{\hat{F}_1, \hat{F}_2, \dots, \hat{F}_T\}\right)$$

$$y_t = \left\{M_{1,t}, M_{2,t}, \dots, M_{N,t}\right\}$$

Here, $y_t$ may correspond to a prediction result of the map element generation module 1036.

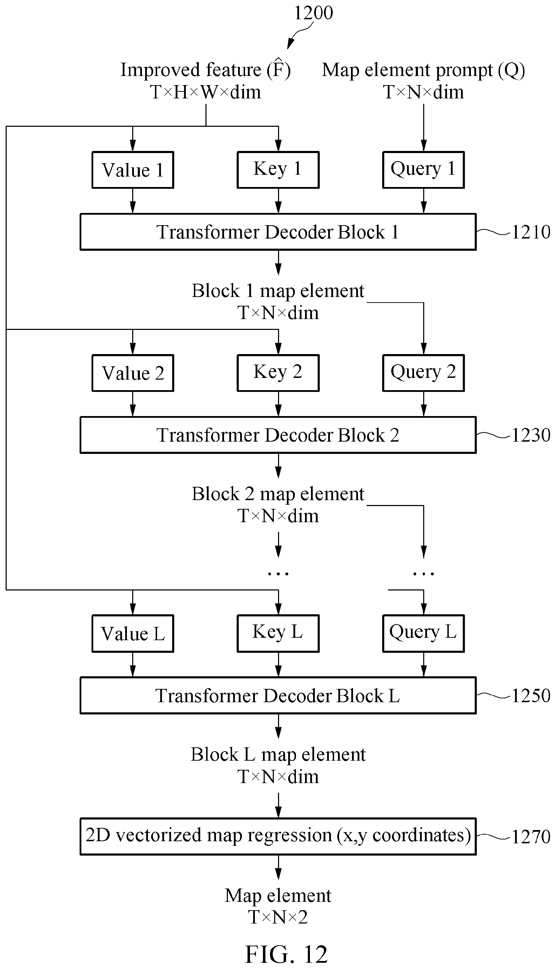

The map element generation module 1036 simultaneously generates map elements of all time points by referencing features of all consecutive time points, thereby analyzing temporal consistency between map elements and enabling the neural network 1030 to learn the same shape characteristic. The map element generation module 1036 may be implemented as any of various neural networks capable of generating map elements by referencing feature information from a prompt. The map element generation module 1036 may be implemented as, for example, a DNN-based transformer decoder but is not necessarily limited thereto. A prompt may define feature information for each time, and prompts with the same index at each time may generate the same map element. The map element generation module 1036 may generate map elements by referencing features previously exchanged through the feature exchange module 1033. In this case, map elements with the same index at each time may generate the same map element at different times. The map element generation module 1036 may collect the generated map elements and finally generate the vectorized map 1050 corresponding to each time point. The operation of the map element generation module 1036 is described in more detail below with reference to FIG. 12.

The control apparatus 1000 may compare and analyze the vectorized map 1050 generated at each time point to calculate a temporal consistency loss (TCL) as in Equation 4 below.

$$\text{Equation } 4$$

$$TCL = \sum_{t=1}^{T-1} L_{instance\ match}(y_t, y_{t+1})$$

Here, T may denote T consecutive time points. $y_t$ may denote the prediction result at a time point t.

The control apparatus may apply a loss function L to make the prediction results at two time points similar using a matching relationship (e.g., a comparison result between the generated vectorized map and the GT) based on the prediction results for the vectorized map. Various loss functions such as an L1 loss may be used as the loss function. The control apparatus may repeat the process described above for all time points (e.g., t-N to t) to produce the final loss value.

The control apparatus may train the feature extraction module 930, the feature exchange module 1033, and the map element generation module 1036 by the comparison result between the generated vectorized map and the GT. Losses used for training the feature extraction module 930, the feature exchange module 1033, and the map element generation module 1036 may be of two types.

One of the losses is the loss between commonly known predictions (e.g. map elements) and the GT, which may lead to the generation of a vectorized map that looks identical to the GT. In this case, map elements may have unique element indices for respective time points. The control apparatus may match the GT to the map elements such that elements with the same index at different time points generate the same map elements. For example, when a map element corresponding to an n-th index at time point 1 (time 1) generates the lane immediately to the left of the vehicle, the control apparatus may match a map element corresponding to the n-th index at time point 2 (time 2) to the GT to generate the lane immediately to the left of the vehicle. When the same indices generate the same map elements in this way, the control apparatus may link map elements at different time points to enable tracking of the map elements at consecutive times.

The other loss may correspond to the loss that causes the same map elements to be generated in the same shape in vectorized maps generated at different times. A lot of information may be utilized during learning. By utilizing movement information of a vehicle, vectorized maps generated at different times may be warped to different times.

The control apparatus may eliminate flickering or distortion that may occur in a vectorized map generated at consecutive times using a loss such that the vectorized maps warped from different times produce the same result as the vectorized map at the current time.

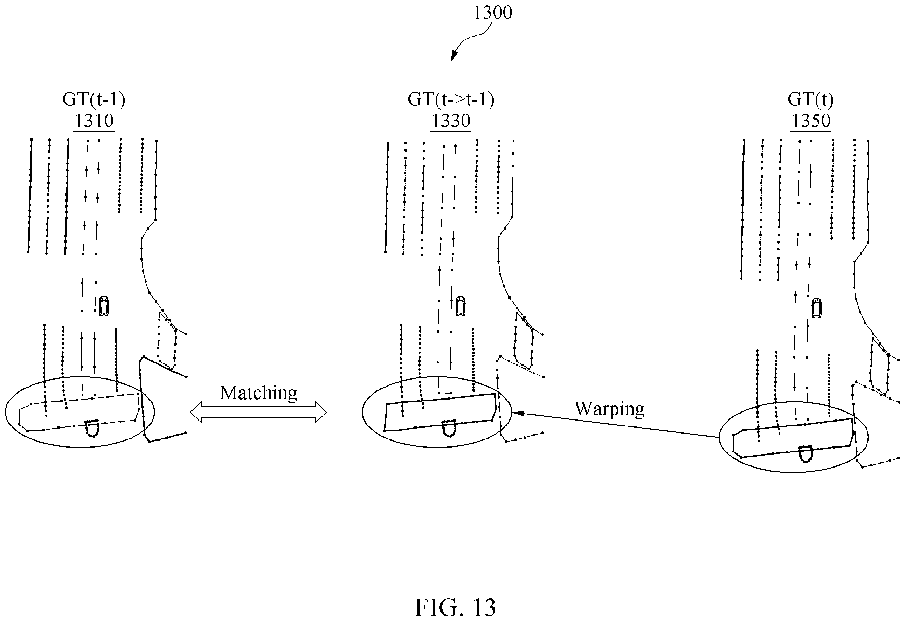

The control apparatus 1000 may calculate two types of losses, supervised learning and unsupervised learning, according to an instance matching scheme and apply the calculated losses to the training of the neural network 1030. The method of training the neural network 1030 is described in more detail below with reference to FIG. 13.

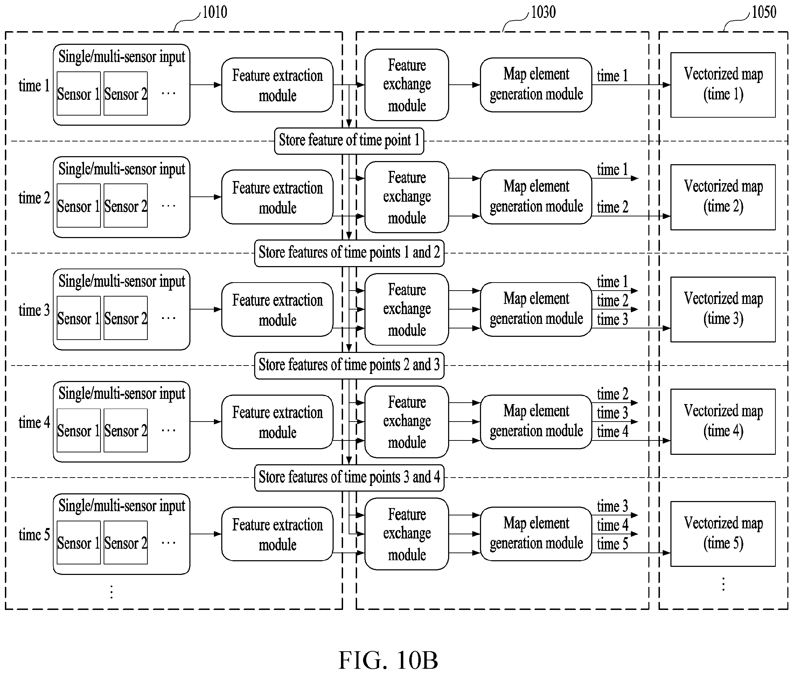

FIG. 10B illustrates an example in which a control apparatus is mounted on a vehicle and recognizes a lane during driving, according to one or more embodiments.

When the control apparatus 1000 is mounted on or incorporated in a vehicle and generates the vectorized map 1050 online, the control apparatus 1000 may generate the vectorized map 1050 for each time point, as shown in FIG. 10B.

The control apparatus 1000 may extract a feature of a time point 1 (time 1) and use the feature as an input to the feature exchange module 1033 while simultaneously storing the feature of the time point 1 (time 1) in a memory, since there are no features stored at previous time points at the time point 1 (time 1), for example.

The control apparatus 1000 may use the feature of the time point 1 (time 1) stored in the memory at the previous time point as an input to the feature exchange module 1033 instead of newly extracting the feature of the time point 1 (time 1) at a time point 2 (time 2). The control apparatus 1000 may store the feature of the time point 2 (time 2) in the memory.

Additionally, rather than newly extracting features of the time point 1 (time 1) and the time point 2 (time 2) at the time point 3 (time 3), the control apparatus 1000 may use features stored into the memory at previous time points (e.g., the feature of the time point 1 (time 1) and the feature of the time point 2 (time 2)) as inputs to the feature exchange module 1033.

The control apparatus may generate a vectorized map corresponding to each of the consecutive time points (e.g., time 1, time 2, and time 3) as described above and then control driving of the vehicle using a finalized vectorized map (time 3) corresponding to the current time point, the time point 3 (time 3). The driving control of the vehicle may include, but is not necessarily limited to, assisting the driving of the vehicle, such as lane recognition, driving path setting, and driving parameter setting, or setting control parameters for controlling the driving of the vehicle.

FIG. 11 illustrates an example of an operation of a feature exchange module, according to one or more embodiments. FIG. 11 illustrates a diagram 1100 showing a structure of the feature exchange module 1033.

Features (e.g., a time 1 feature, a time 2 feature, and a time 3 feature) $(F_t)$ with a size of $H(Height) \times W(Width) \times$ dim (*dimension*) at respective time points may be input into the feature exchange module 1033. When the feature exchange module 1033 receives T features, the feature exchange module 1033 may pass through L convolutions or transformers (convolutional/transformer blocks), such as 1110, 1130, and 1150, and output an improved feature $(\hat{F}_t)$ with a size of $T \times H \times W \times dim.$

FIG. 12 illustrates an example of an operation of a map element generation module. FIG. 12 illustrates a diagram 1200 showing an example of a structure of the map element generation module 1036.

The map element generation module 1036 may extract a value and a key from an enhanced feature (

$$\hat{F} \in \mathbb{R}^{T \times H \times W \times dim}$$

) at all time points received from the feature exchange module 1033 described above. Additionally, the map element generation module 1036 may extract a query from a map element prompt (

$$Q \in \mathbb{R}^{T \times N \times dim}$$

) corresponding to map elements.

The map element generation module 1036 may generate features of map elements referencing the enhanced feature by sequentially applying values, keys, and queries extracted at respective time points as inputs to L transformer decoder blocks 1210, 1230, and 1250. The map element generation module 1036 may generate N map elements corresponding to respective time points by enabling features of the map elements referencing the enhanced feature to pass through a 2D vectorized map regression layer 1270. The N map elements may have a size of, for example, T xNx2.

FIG. 13 illustrates an example method of designing a loss for training a neural network, according to one or more embodiments. Diagram 1300 shows a process in which a control apparatus trains the neural network 1030 by calculating two types of losses, supervised learning and unsupervised learning, according to an instance matching scheme.

The control apparatus may eliminate flickering or distortion that may occur in a vectorized map generated at consecutive times using a loss such that the vectorized maps warped from different times produce the same result as the vectorized map at the current time.

An instance matching loss may be calculated in the following order.

The control apparatus may warp a prediction result $(y_t)$ corresponding to a time point t 1350 to a time point t-1 1330 as expressed in $y_{t \to t-1} = warping(y_t)$. The control apparatus may calculate a matching relationship based on the time point t by warping a prediction result $(y_{t-1})$ corresponding to a t-1 time point 1310 to the time point t.

The control apparatus may perform instance matching between the warped image and a predicted result image as expressed in $matching(y_{t \to t-1}, y_{t-1})$.

The control apparatus may calculate the instance matching loss between the warped image and the original image. In this case, a Hungarian algorithm or the like may be used as a matching algorithm, but examples are not limited thereto.

According to supervised learning, the control apparatus may calculate the matching relationship with the GT (g) and then apply the calculated matching relationship to calculation of prediction matching relationship such as $matching(g_t, y_t)$, $matching(g_{t-1}, y_{t-1})$, $matching(g_{t \to t-1}, g_{t-1})$, and matching $(y_{t \to t-1}, y_{t-1})$. Here, g denotes the GT and y denotes a predicted result. The function matching() may perform matching between instances at the same position in two input vectorized maps. When there is a GT available, matching() may perform matching between a predicted result and the GT, which may lead to an accurate matching result. Accordingly, more accurate matching between predicted results at two different time points may be performed.

In contrast, with an unsupervised learning approach, the control apparatus may calculate the matching relationship between the warped image and the predicted result image as expressed in $matching (y_{t \to t-1}, y_{t-1})$. Unsupervised learning may be used when there is no GT. With unsupervised learning, the control apparatus may warp $(y_{t \to t-1})$, which is a predicted result from a previous time point, to a current time point to directly match the predicted result from the previous time point to a result $(y_t)$ at the current time point.

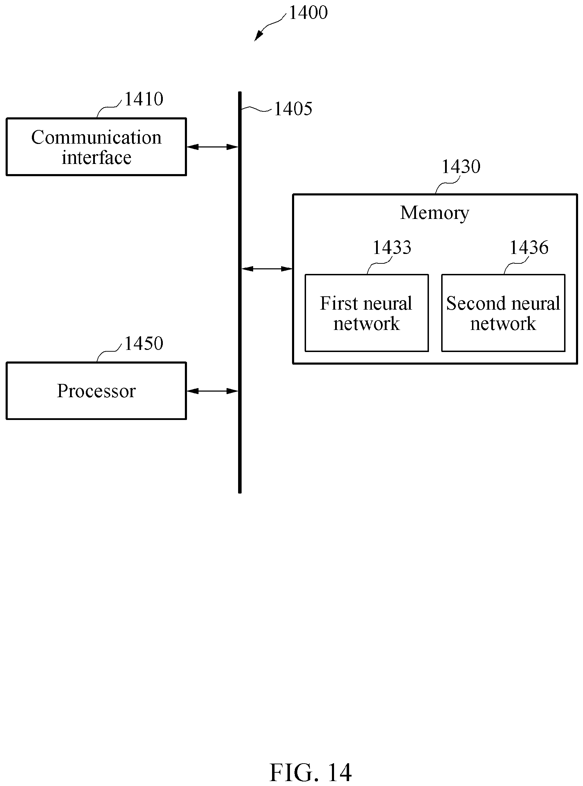

FIG. 14 illustrates an example of an apparatus for controlling driving of a vehicle, according to one or more embodiments. Referring to FIG. 14, a control apparatus 1400 may include a communication interface 1410, a memory 1430 including a first neural network 1433 and a second neural network 1436, and a processor 1450. The communication interface 1410, the memory 1430, and the processor 1450 may be connected to one another via a communication bus 1405.

The communication interface 1410 may receive multi-view images including image frames at consecutive time points corresponding to a driving environment of a vehicle.

The memory 1430 may store parameters of a pre-trained neural network. The processor 1450 may generate a vectorized map using a neural network model to which the parameters stored in the memory 1430 are applied. In addition, the memory 1430 may store a variety of data and programs. The memory 1430 may include a volatile memory or a non-volatile memory. The memory 1430 may include a large-capacity storage medium such as a hard disk to store the variety of data.

The first neural network 1433 may extract BEV features and map queries respectively corresponding to consecutive time points for each of the image frames. The first neural network 1433 may be, for example, the first neural network 510 described above with reference to FIG. 5 but is not limited thereto.

The second neural network 1436 may predict and vectorize map elements included in the image frames and generate a vectorized map based on first memory tokens stored in the memory 1430 corresponding to queries of previous image frames of the image frames, BEV features, and map queries. The second neural network 1436 may be, for example, the second neural network 540 described above with reference to FIG. 5 but is not limited thereto.

The processor 1450 may control driving of the vehicle based on the vectorized map generated by the second neural network 1436. The processor 1450 may control driving of the vehicle by generating various control parameters for steering of the vehicle and assisting driving of the vehicle based on the vectorized map.

Also, the processor 1450 may perform at least one of the methods described with reference to FIGS. 1 to 13 or an algorithm corresponding to at least one of the methods. The processor 1450 may be a hardware-implemented data processing device having a circuit that is physically structured to execute desired operations. The desired operations may include, for example, code or instructions included in a program. The processor 1450 may include, for example, a central processing unit (CPU), a graphics processing unit (GPU), or a neural network processing unit (NPU). The control apparatus 1400 may include, for example, a microprocessor, a CPU, a processor core, a multi-core processor, a multiprocessor, an application-specific integrated circuit (ASIC), and a field-programmable gate array (FPGA).

The processor 1450 may execute a program and control the control apparatus 1400. Program code to be executed by the processor 1450 may be stored in the memory 1430.

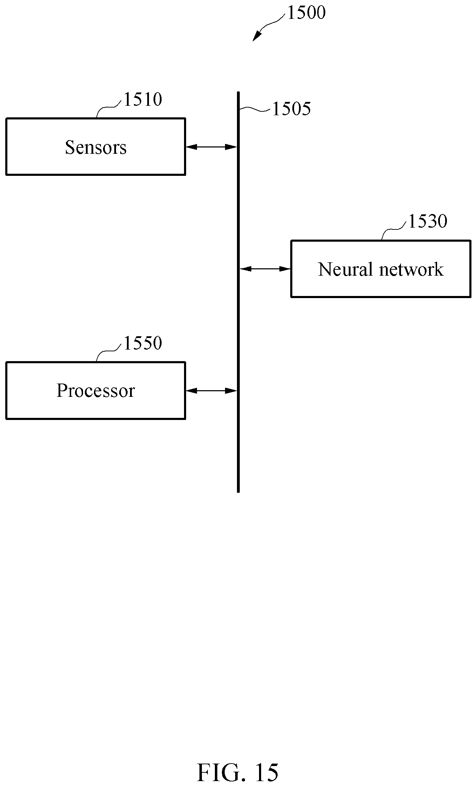

FIG. 15 illustrates an example of a vehicle, according to one or more embodiments. Referring to FIG. 15, a vehicle 1500 may include sensors 1510, a neural network 1530, and a processor 1550. The sensors 1510, the neural network 1530, and the processor 1550 may be connected to one another via a communication bus 1505.

The sensors 1510 may capture multi-view images including image frames at consecutive time points corresponding to a driving environment of the vehicle. The sensors 1510 may include, for example, a camera sensor, a vision sensor, a Lidar sensor, a multi-camera sensor, a radar sensor, and the like, but examples are not limited thereto.

The neural network 1530 may extract BEV features and map queries respectively corresponding to consecutive time points for each of the image frames. The neural network 1530 may predict and vectorize map elements included in the image frames and generate a vectorized map based on first memory tokens stored in the memory corresponding to queries of previous image frames of the image frames, BEV features, and map queries. The neural network 1530 may be, for example, a neural network in which the first neural network 510 and the second neural network 540 illustrated in FIG. 5 are combined into one or may be a neural network in which the first neural network 510 and the second neural network 540 are separated from each other.

The processor 1550 may generate a control signal for driving the vehicle based on the vectorized map generated by the neural network 1530.

Also, the processor 1550 may perform one or more of the methods described with reference to FIGS. 1 to 14 or an algorithm corresponding to one or more of the methods. The processor 1550 may be a hardware-implemented data processing device having a circuit that is physically structured to execute desired operations. The desired operations may include, for example, code or instructions included in a program. The processor 1550 may include, for example, a CPU, a GPU, or an NPU. The vehicle 1500 may include, for example, a microprocessor, a CPU, a processor core, a multi-core processor, a multiprocessor, an ASIC, and an FPGA.

The processor 1550 may execute a program and control the vehicle 1500. Program code to be executed by the processor 1550 may be stored in the memory.

The examples described herein may be implemented using a hardware component, a software component (instructions), and/or a combination thereof. A processing device may be implemented using one or more general-purpose or special-purpose computers, such as, for example, a processor, a controller and an arithmetic logic unit (ALU), a digital signal processor (DSP), a microcomputer, an FPGA, a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is singular; however, one of ordinary skill in the art will appreciate that a processing device may include multiple processing elements and multiple types of processing elements. For example, the processing device may include a plurality of processors, or a single processor and a single controller. In addition, different processing configurations are possible, such as parallel processors.

The software (instructions) may include a computer program, a piece of code, an instruction, or one or more combinations thereof, to independently or uniformly instruct or configure the processing device to operate as desired. Software and/or data may be stored permanently or temporarily in any type of machine, component, physical or virtual equipment, or computer storage medium or device capable of providing instructions or data to or being interpreted by the processing device. The software may also be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

The computing apparatuses, the vehicles, the electronic devices, the processors, the memories, the image sensors, the vehicle/operation function hardware, the ADAS/AD systems, the displays, the information output system and hardware, the storage devices, and other apparatuses, devices, units, modules, and components described herein with respect to FIGS. 1-15 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-15 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or

**EP 4 651 095 A1**

more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

**Claims**

1.  A method of controlling driving of a vehicle, the method comprising:

    receiving multi-view images comprising image frames of a driving environment of the vehicle at consecutive time points;
    extracting bird's-eye view (BEV) features respectively corresponding to the consecutive time points for each of the image frames, and extracting map queries respectively corresponding to the consecutive time points for each of the image frames;
    generating a vectorized map by predicting and vectorizing map elements represented in the image frames, the generating based on first memory tokens stored in a memory corresponding to queries of previously-processed image frames, the BEV features, and the map queries; and
    controlling the driving of the vehicle based on the vectorized map.

**2.** The method of claim 1, wherein the extracting of the BEV features and the map queries comprises:

extracting image features of a perspective view (PV) corresponding to the image frames using a backbone network;
transforming the image features of the PV into the BEV features;
extracting the map queries at a frame level used to construct the vectorized map based on the BEV features and a query corresponding to the image frames; and
outputting the BEV features and the map queries.

**3.** The method of claim 1 or 2, wherein the generating of the vectorized map comprises:

reading the first memory tokens;
based on the map queries, the BEV features, and the first memory tokens, generating map tokens comprising the map elements comprised in the vectorized map and/or clip tokens comprising vectorized features corresponding to the image frames; and
generating the vectorized map based on the map tokens.

**4.** The method of claim 3, wherein the generating of the map tokens and/or the clip tokens comprises:

generating, from the map queries and the first memory tokens, the clip tokens comprising cues for the map elements in a feature space corresponding to the image frames;
updating the BEV features using the clip tokens such that the BEV features comprise hidden map elements; and
generating the map tokens using the updated BEV features and the map queries.

**5.** The method of claim 3 or 4, wherein sizes of the map queries are determined based on sizes of the clip tokens, a number of the map elements, or a number of points for each of the map elements.

**6.** The method of claim 4, wherein the updating of the BEV features comprises:

extracting a query from the BEV features;
extracting a key and a value from the clip tokens; and
updating the BEV features via a cross-attention network and a feed-forward network using the query, the key, and the value; and/or
wherein the generating of the map tokens comprises generating the map tokens from the map queries and the updated BEV features using a deformable attention network, a decoupled self-attention network, and a feed-forward network, wherein preferably the generating of the map tokens comprises generating the map tokens by extracting the queries from the map queries using the deformable attention network and obtaining a value from the updated BEV features.

**7.** The method of any one of the previous claims, wherein

the generating of the vectorized map comprises generating the vectorized map by predicting the map elements represented in the image frames by a pre-trained neural network and vectorizing the map elements for each instance, and
the pre-trained neural network comprises at least one of:

a (2-1)-th neural network configured to read the first memory tokens from the memory or write second memory tokens to the memory; and
a (2-2)-th neural network configured to generate the vectorized map corresponding to a current frame among the image frames based on the map queries, the BEV features, and the first memory tokens.

**8.** The method of claim 7, wherein the generating of the vectorized map comprises:

writing the map tokens to the memory by the (2-1)-th neural network; and
generating the vectorized map as a map token corresponding to the current frame among the map tokens passes through a prediction head.

**9.** The method of claim 7 or 8, further comprising:

generating the second memory tokens by writing the map tokens and the clip tokens to the memory using the (2-1)-th neural network; and
outputting the second memory tokens.

10. The method of any one of claims 7-9, wherein the (2-1)-th neural network is configured to preserve time information corresponding to the previous image frames by reading first memory tokens corresponding to the previous image frames to propagate the first memory tokens as an input for the (2-2)-th neural network; and/or

wherein the (2-1)-th neural network is configured to set intra-clip associations between the map elements by associating inter-clip information through propagation of clip tokens generated in the (2-2)-th neural network; and/or
wherein the (2-1)-th neural network is configured to generate the second memory tokens comprising global map information through embedding of a learnable frame and store the second memory tokens in the memory, based on the map tokens and the clip tokens generated in the (2-2)-th neural network; and/or
wherein the (2-1)-th neural network is configured to generate the second memory tokens by combining clip tokens, the map tokens, and the first memory tokens together.

11. The method of any one of claims 7-10, wherein the (2-2)-th neural network is configured to generate the vectorized map by outputting a map token corresponding to a current frame having a predetermined time window corresponding to lengths of the image frames, based on the first memory tokens, the BEV feature, and the map queries.

12. The method of any one of the previous claims, wherein the map elements comprise a crosswalk, a road, a lane, a lane boundary, a building, a curbstone, or traffic lights comprised in the driving environment.

13. A non-transitory computer-readable storage medium storing instructions that, when executed by a processor, cause the processor to perform the method of any one of the previous claims.

14. An apparatus for controlling driving of a vehicle, the apparatus comprising:

a communication interface configured to receive multi-view images of a driving environment of the vehicle at consecutive time points;
a first neural network configured to extract bird's-eye view (BEV) features respectively corresponding to the consecutive time points for each of the image frames, and configured to extract map queries respectively corresponding to the consecutive time points for each of the image frames;
a second neural network configured to generate a vectorized map by predicting and vectorizing map elements represented in the image frames based on first memory tokens stored in a memory corresponding to queries of previously-processed image, the BEV features, and the map queries; and
a processor configured to control driving of the vehicle based on the vectorized map.

15. A vehicle comprising:

sensors configured to capture multi-view images comprising image frames at consecutive time points corresponding to a driving environment of the vehicle; and
the apparatus of claim 14.

```
                          ╭─────────╮
                          │  Start  │
                          ╰────┬────╯
                               │
                               ▼
  ┌────────────────────────────────────────────────────────┐
  │  Receive multi-view images including image frames at    │
  │  consecutive time points corresponding to driving       │─── 110
  │  environment of vehicle                                 │
  └────────────────────────────┬───────────────────────────┘
                               │
                               ▼
  ┌────────────────────────────────────────────────────────┐
  │  Extract BEV features and map queries respectively      │
  │  corresponding to consecutive time points for each of   │─── 120
  │  image frames                                           │
  └────────────────────────────┬───────────────────────────┘
                               │
                               ▼
  ┌────────────────────────────────────────────────────────┐
  │  Generate vectorized map by predicting and vectorizing  │
  │  map elements included in image frames based on first   │
  │  memory tokens stored in memory corresponding to        │─── 130
  │  queries of previous image frames of image frames, BEV  │
  │  features, and map queries                              │
  └────────────────────────────┬───────────────────────────┘
                               │
                               ▼
  ┌────────────────────────────────────────────────────────┐
  │       Control driving of vehicle based on               │─── 140
  │       vectorized map                                    │
  └────────────────────────────┬───────────────────────────┘
                               │
                               ▼
                          ╭─────────╮
                          │   End   │
                          ╰─────────╯
```

FIG. 1

120

```
            ┌─────────┐
            │  Start  │
            └─────────┘
                 │
                 ▼
┌───────────────────────────────────────────────┐
│  Extract image features of perspective view    │
│  corresponding to image frames using           │──── 210
│  backbone network                              │
└───────────────────────────────────────────────┘
                 │
                 ▼
┌───────────────────────────────────────────────┐
│  Transform image features of perspective view  │──── 220
│  into BEV features                             │
└───────────────────────────────────────────────┘
                 │
                 ▼
┌───────────────────────────────────────────────┐
│  Extract frame-level map queries used to       │
│  construct vectorized map based on queries     │──── 230
│  corresponding to BEV features and image frames│
└───────────────────────────────────────────────┘
                 │
                 ▼
┌───────────────────────────────────────────────┐
│  Output BEV features and map queries           │──── 240
└───────────────────────────────────────────────┘
                 │
                 ▼
            ┌─────────┐
            │   End   │
            └─────────┘
```

FIG. 2

130

```
        ┌─────────┐
        │  Start  │
        └─────────┘
             │
             ▼
┌───────────────────────────────────────────────────────────┐
│            Read first memory tokens                        │──310
└───────────────────────────────────────────────────────────┘
             │
             ▼
┌───────────────────────────────────────────────────────────┐
│   Generate at least one of map tokens including map        │
│   elements included in vectorized map and clip tokens      │──320
│   including vectorized features corresponding to           │
│   image frames based on map queries, BEV features, and     │
│   first memory tokens                                      │
└───────────────────────────────────────────────────────────┘
             │
             ▼
┌───────────────────────────────────────────────────────────┐
│        Generate vectorized map based on map tokens         │──330
└───────────────────────────────────────────────────────────┘
             │
             ▼
        ┌─────────┐
        │   End   │
        └─────────┘
```

FIG. 3

320

Start

Generate clip tokens including cues for map elements in feature space corresponding to image frames from map queries and first memory tokens ~410

Update BEV features using clip tokens such that BEV features include hidden map elements ~420

Generate map tokens using updated BEV features and map queries ~430

End

FIG. 4

FIG. 5

EP 4 651 095 A1

FIG. 6

FIG. 7

The diagram labeled 700 shows the (2-2)-th neural network 540-2 with the following components:

- Map queries $(Q^{map})$ 520, input $U_{\ell-1}^{map}$
- BEV features $(F^{BEV})$ 525, input $U_{\ell-1}^{BEV}$
- Memory read $(U^{Read})$ 710, input $U_{\ell-1}^{clip}$
- Clip token generator 542: Cross attention, Self attention, Feed forward
- BEV updater 544: Cross attention, Feed forward
- Map generator 546: Deformable attention, Decoupled self attention, Feed forward
- Map tokens $(U_{\ell}^{map})$ 550
- Updated BEV features $(U_{\ell}^{BEV})$ 555
- Clip tokens $(U_{\ell}^{clip})$ 560
- $P_M$ Map token positional embedding
- $P_B$ BEV feature positional embedding
- $P_C$ Clip token positional embedding

( Start )

Receive sensor information including synchronized multi-view images including image frames at consecutive time points corresponding to driving environment of vehicle — 810

Extract features corresponding to consecutive time points from sensor information — 820

Generate map elements corresponding to driving environment by propagating feature for each time point among extracted features into pre-trained neural network — 830

Generate vectorized map for each time point using map elements — 840

Control driving of vehicle based on vectorized map — 850

( End )

FIG. 8

FIG. 9

EP 4 651 095 A1

FIG. 10A

FIG. 10B

1100

time 1 feature
H×W×dim

time 2 feature
H×W×dim

time 3 feature
H×W×dim

| Convolutional / Transformer Block 1 | ~1110 |

Block 1 feature
T×H×W×dim

| Convolutional / Transformer Block 2 | ~1130 |

Block 2 feature
T×H×W×dim

. . .

| Convolutional / Transformer Block L | ~1150 |

Block L feature
T×H×W×dim

FIG. 11

1200

Improved feature (F̂)
T×H×W×dim

Map element prompt (Q)
T×N×dim

| Value 1 | Key 1 | Query 1 |

| Transformer Decoder Block 1 | ~1210 |

Block 1 map element
T×N×dim

| Value 2 | Key 2 | Query 2 |

| Transformer Decoder Block 2 | ~1230 |

Block 2 map element
T×N×dim

. . .  . . .

| Value L | Key L | Query L |

| Transformer Decoder Block L | ~1250 |

Block L map element
T×N×dim

| 2D vectorized map regression (x,y coordinates) | ~1270 |

Map element
T×N×2

FIG. 12

GT(t-1)
1310

GT(t->t-1)
1330

GT(t)
1350

1300

Matching

Warping

FIG. 13

EP 4 651 095 A1

1400

1410

Communication
interface

1405

1430

Memory

1433

First neural
network

1436

Second neural
network

1450

Processor

FIG. 14

1500

1510

1505

Sensors

1530

Neural network

1550

Processor

FIG. 15

Europäisches
Patentamt
European
Patent Office
Office européen
des brevets

## EUROPEAN SEARCH REPORT

Application Number

EP 24 22 1093

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Liu Yicheng ET AL: "VectorMapNet: End-to-end Vectorized HD Map Learning", arXiv, 26 June 2023 (2023-06-26), pages 1-18, XP093276838, Retrieved from the Internet: URL:https://arxiv.org/pdf/2206.08920 [retrieved on 2025-05-13] * abstract * * section 3 * * figure 2 * ----- | 1-15 | INV. G06V10/62 G06V10/764 G06V10/82 G06V20/56 G06V20/64 |
| A | HE YUZE ET AL: "VI-Map: Infrastructure-Assisted Real-Time HD Mapping for Autonomous Driving", PROCEEDINGS OF THE 54TH ACM TECHNICAL SYMPOSIUM ON COMPUTER SCIENCE EDUCATION V. 2, ACMPUB27, NEW YORK, NY, USA, 2 October 2023 (2023-10-02), pages 1-15, XP059586011, DOI: 10.1145/3570361.3613280 ISBN: 979-8-4007-0073-6 * the whole document * ----- | 1-15 | |

| | TECHNICAL FIELDS SEARCHED (IPC) |
|---|---|
| | G06V |

The present search report has been drawn up for all claims

| Place of search | Date of completion of the search | Examiner |
|---|---|---|
| The Hague | 13 May 2025 | Angelopoulou, Maria |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)